(19) Europäisches Patentamt / European Patent Office / Office européen des brevets

(11) **EP 3 795 040 B1**

(12) **EUROPEAN PATENT SPECIFICATION**

(45) Date of publication and mention
of the grant of the patent:
**30.11.2022 Bulletin 2022/48**

(21) Application number: **18922927.1**

(22) Date of filing: **09.08.2018**

(51) International Patent Classification (IPC):
**A47J 27/08** (2006.01)  **G05B 19/04** (2006.01)
**A47J 36/32** (2006.01)

(52) Cooperative Patent Classification (CPC):
**A47J 36/32; G05B 19/04**

(86) International application number:
**PCT/CN2018/099623**

(87) International publication number:
**WO 2019/237483 (19.12.2019 Gazette 2019/51)**

(54) **COOKING CONTROL METHOD AND DEVICE, AND COMPUTER STORAGE MEDIUM**

KOCHSTEUERUNGSVERFAHREN UND -VORRICHTUNG SOWIE
COMPUTERSPEICHERMEDIUM

PROCÉDÉ ET DISPOSITIF DE COMMANDE DE CUISSON ET SUPPORT D'INFORMATIONS
INFORMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2018 CN 201810613609**

(43) Date of publication of application:
**24.03.2021 Bulletin 2021/12**

(73) Proprietor: **Foshan Shunde Midea Electrical
Heating Appliances
Manufacturing Co., Ltd.
Foshan, Guangdong 528311 (CN)**

(72) Inventor: **LIANG, Mengjie
Foshan, Guangdong 528311 (CN)**

(74) Representative: **RGTH
Patentanwälte PartGmbB
Neuer Wall 10
20354 Hamburg (DE)**

(56) References cited:
EP-A2- 0 050 240    CN-A- 101 112 291
CN-A- 104 957 967    CN-A- 106 647 392
CN-A- 107 065 634    CN-A- 107 763 677

**Description**

TECHNICAL FIELD

The disclosure relates to the technical field of household appliances, and in particular to a method and device and a computer storage medium for the cooking control.

BACKGROUND

Sous Vide, also known as low-temperature vacuum cooking, is a cooking method that heat sealed food materials at a relatively low temperature for a long time. The use of the method not only can keep the original taste of food materials and reduce the loss of nutrients, but also can accurately control the doneness of food through temperature and time, so that the cooking can obtain the same flavor and quality each time. At present, it is one of the favorite cooking methods for the world's top chefs. However, for different foods or different cooking tastes, different temperatures is required to be controlled, and the cooking method requires extremely precise temperature control, otherwise the taste of the food cannot be guaranteed.

CN 107763677 A discloses a method for precise temperature control of cooking utensils that is based on the temperature sensing characteristics of different pots, through verification, recording differences, and then compensating for the differences. CN104957967A discloses a cooking appliance and a control method thereof, which can greatly suppress the positive temperature drift of the cooking cavity temperature during the temperature rise stage of the cooking cavity of the cooking appliance.

For electric pressure cookers on the current market, since a sensor is placed either on a top cover or at the bottom and cannot directly touch the water inside the pot, and since a system error in a detection circuit of product, a cooking temperature set in a cooking process is only the temperature of the sensor rather than the actual temperature of food/soup, so the temperature control in the cooking process has a certain deviation, which causes that a temperature control accuracy cannot reach a cooking requirement, and then it is difficult to achieve the cooking effect of Sous Vide.

SUMMARY

The embodiments of the disclosure are intended to provide a cooking control method and device, and a computer storage medium, which may achieve the effects of improving accuracy and stability of the temperature control.

A technical solution of the disclosure is implemented as follows.

In a first aspect, the invention provides a cooking control method according to independent claim 1.

In a second aspect, the invention provided a cooking control device according to independent claim 7.

In a third aspect, the invention provides a cooking control device according to independent claim 12.

In a fourth aspect, the invention provides a computer storage medium according to independent claim 13.

The embodiments of the disclosure provide a cooking control method and cooking control device, and a computer storage medium. In the embodiments of the disclosure, the target temperature and the target time duration are received, the temperature compensation value corresponding to the target temperature is determined according to the preset relationship between the temperature range and the temperature compensation value, the temperature value of the target temperature is corrected according to the temperature compensation value to obtain the target temperature threshold parameter, and the cooking processing is controlled according to the target temperature threshold parameter and the target time duration. In this way, through the temperature compensation solution of the disclosure, the temperature of food/soup is closer to the set target temperature, thereby improving the temperature control accuracy and improving an effect of cooking at a constant temperature.

BRIEF DESCRIPTION OF THE DRAWINGS

FIG. 1 illustrates a flowchart of a cooking control method provided by an embodiment of the disclosure.

FIG. 2 illustrates a specific flowchart of a cooking control method provided by an embodiment of the disclosure.

FIG. 3 illustrates a structural schematic diagram of an electric pressure cooker provided by an embodiment of the disclosure.

FIG. 4 illustrates a structural schematic diagram of a cooking control device provided by an embodiment of the disclosure.

FIG. 5 illustrates a structural schematic diagram of another cooking control device provided by an embodiment of the disclosure.

FIG. 6 illustrates a hardware structure diagram of a cooking control device provided by an embodiment of the disclosure.

DETAILED DESCRIPTION

The technical solutions in the embodiments of the disclosure are clearly and completely described below in combination with the accompanying drawings in the embodiments of the disclosure.

Embodiment 1

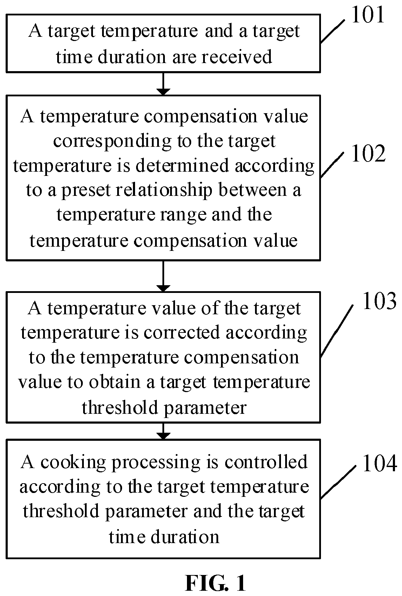

Referring to FIG. 1 that shows a cooking control method provided by an embodiment of the disclosure, which may be applied to a household appliance, the method may include the following steps.
At S101, a target temperature and a target time duration are received.
At S102, a temperature compensation value corresponding to the target temperature is determined according to a preset relationship between a temperature range and the temperature compensation value.
At S103, a temperature value of the target temperature is corrected according to the temperature compensation value to obtain a target temperature threshold parameter.
At S104, a cooking processing is controlled according to the target temperature threshold parameter and the target time duration.
In the present embodiment, the temperature compensation value corresponding to the target temperature is determined according to the preset relationship between the temperature range and the temperature compensation value, and then the temperature value of the target temperature is corrected according to the temperature compensation value to obtain the target temperature threshold parameter, and finally, the cooking processing is controlled according to the target temperature threshold parameter and the received target time duration.
In order to prompt a user to put in food to be cooked, in the technical solution shown in FIG. 1, when the target time duration reaches a preset time threshold, a prompt signal is sent. The preset time threshold is a preset cooking time duration from a moment of starting to cook to a moment of reaching the target temperature, and the prompt signal is used to prompt the user to put in the food to be cooked.
In order to achieve the purpose of accurate temperature control, in the technical solution shown in FIG. 1, the cooking process includes: a heating m stage and a heating maintaining stage. m represents a sequence number of the grade of the heating stage, which is an integer progressively increasing from 1, and the maximum value of m is S. The value of S is an integer from 3 to 8. The value of S may be determined according to an actual function of the household appliance. In order to further achieve the accurate temperature control, there are temperature sensing devices installed on the top of a pot cover and at the bottom of a cooking chamber of the household appliance to monitor the temperature in the cooking chamber of the household appliance. The temperature sensing devices may include a temperature sensor and other devices capable of measuring temperature.
Because Sous Vide needs to set the target temperature and the target time duration, in specific implementation, the user sets the target temperature and the target time duration according to the food to be cooked, and then presses a function button to start cooking. It is to be noted that the food to be cooked is not placed in the household appliance at this stage.
Because there is a system error in a detection circuit of the household appliance, the temperature needs to be compensated for accurate temperature control. Based on this, in the technical solution shown in FIG. 1, that the temperature compensation value corresponding to the target temperature is determined according to the preset relationship between the temperature range and the temperature compensation value may include that:

when $i < K$, if $P < M_i$, it is determined that $\delta = \delta_i$, and if $M_{i+1} \geq P \geq M_i$, it is determined that $\delta = \delta_{i+1}$; and

when $i = K$, if $P < M_i$, it is determined that $\delta = \delta_i$, and if $P \geq M_i$, it is determined that $\delta = \delta_{i+1}$.

P is the target temperature, $M_i$ is a preset first step temperature value, $\delta_i$ is a preset temperature compensation value, i is an integer progressively increasing from 0, K is the number of divided grades, and $\delta$ is the temperature compensation value corresponding to the target temperature.
It is understandable that due to the influence of the system error in the detection circuit of the household appliance, the temperature control accuracy cannot reach a cooking requirement. In the specific implementation of the embodiments of the disclosure, the relationship between the temperature range and the temperature compensation value may be obtained through big data analysis and processing, and then the temperature compensation value corresponding to the target temperature may be obtained according to the preset relationship between the temperature range and the temperature compensation value, thereby realizing the correction of the temperature value that is lower than or equal to the target temperature, and achieving the effect of accurate temperature control.

Because neither a preset temperature value nor the temperature value of the target temperature takes into account the system error, the preset temperature value needs to be corrected according to the temperature compensation value. Based on this, in the technical solution shown in FIG. 1, after the temperature compensation value corresponding to the target temperature is determined according to the preset relationship between the temperature range and the temperature compensation value, the method may include the following operation.

A preset second step temperature value and a preset third step temperature value are corrected according to the temperature compensation value to obtain preset temperature threshold parameters. The preset temperature threshold parameters include a first temperature threshold and a second temperature threshold.

It is understandable that in order to achieve the purpose of accurate temperature control, the heating process is refined into S heating stages in the embodiments of the disclosure. In the first S-1 heating stages, there are corresponding preset temperature values, which gradually increase in a step-like manner. Because there are temperature sensing devices provided at the bottom of the cooking chamber and the top of the pot cover of household appliance, the preset temperature values may be divided into the second step temperature value and the third step temperature value. In order to further achieve the purpose of accurate temperature control in the first S-1 heating stages, the preset second step temperature value and the preset third step temperature value of the first S-1 heating stages are corrected through the temperature compensation value. In the S-th heating stage, as the temperature is close to the target temperature, the temperature value of the target temperature is corrected in the S-th heating stage.

Specifically, that the preset second step temperature value and the preset third step temperature value are corrected according to the temperature compensation value to obtain the preset temperature threshold parameters may include the following operations.

When m<S, the first temperature threshold of the heating m stage is calculated according to formula 1:

$$TB_m = ADB(P - PB_m) - \delta\ 1),$$

wherein P is the target temperature, $PB_m$ is the preset second step temperature value of the heating m stage, and P>$PB_m$, TBm is the first temperature threshold of the heating m stage, $\delta$ is the temperature compensation value corresponding to the target temperature, and ADB represents the calculation of a migration temperature of the temperature sensing device located at the bottom of the household appliance.

When m<S, the second temperature threshold of the heating m stage is calculated according to formula 2:

$$TT_m = ADT(P - PT_m) - \delta\ 2),$$

wherein P is the target temperature, $PT_m$ is the preset third step temperature value of the heating m stage, and P>$PT_m$, $TT_m$ is the second temperature threshold of the heating m stage, $\delta$ is the temperature compensation value corresponding to the target temperature, and ADT represents the calculation of the migration temperature of the temperature sensing device located at the top of the household appliance.

Specifically, that the temperature value of the target temperature is corrected according to the temperature compensation value to obtain the target temperature threshold parameter may include the following operations.

When m=S, a lower limit temperature threshold of a heating S stage is calculated according to formula 3:

$$T_{SL} = ADB(P - 2) - \delta\qquad 3),$$

wherein $T_{SL}$ is the lower limit temperature threshold of the heating S stage, P is the target temperature, $\delta$ is the temperature compensation value corresponding to the target temperature, and ADB represents the calculation of the migration temperature of the temperature sensing device located at the bottom of the household appliance.

When m=S, an upper limit temperature threshold of the heating S stage is calculated according to formula 4:

$$T_{SH}=ADB(P)-\delta \qquad 4),$$

wherein the target temperature threshold parameters include the upper limit temperature threshold and the lower limit temperature threshold, $T_{SH}$ is the upper limit temperature threshold of the heating S stage, P is the target temperature, $\delta$ is the temperature compensation value corresponding to the target temperature, and ADB represents the calculation of the migration temperature of the temperature sensing device located at the bottom of the household appliance.

It is understandable that by correcting the preset temperature value and the target temperature of the heating m stage through the temperature compensation value, the system error brought by the detection circuit is avoided and the purpose of further accurate temperature control is achieved.

After the preset temperature threshold parameter and the target temperature threshold parameter are determined, the cooking process is controlled from the heating time duration and the heating temperature. After the cooking process is started, S heating stages are entered first, and then the heating maintaining stage is entered. During the course of the S heating stages, it is determined whether to enter the next heating stage according to the counted heating time duration, the heating temperature and corresponding threshold relationship. In the heating maintaining stage, the effect of stable maintenance at the target temperature is achieved. Based on this, in the technical solution shown in FIG. 1 that the cooking process is controlled according to the target temperature threshold parameter and the target time duration may include the following operations.

When m<S, the following judgment is made:

when $t \geq t_m$ or $TT \geq TT_m$ or $TB \geq TB_m$, a heating m+1 stage is entered; and

when $t < t_m$ or $TT < TT_m$ or $TB < TB_m$, heating is conducted with a power regulation ratio $PW_m$.

When m=S, the following judgment is made:

when $t \geq t_s$, the heating maintaining stage is entered; and

when $t < ts$, if $TB < T_{SL}$, heating is conducted with the power regulation ratio PWs, and if $TB > T_{SH}$, heating is stopped.

is the heating time duration measured in real-time, $t_m$ is the preset time threshold of the heating m stage, TB is a real-time temperature detected by the temperature sensing device located at the bottom of a household appliance, TT is a real-time temperature detected by the temperature sensing device located at the top of the household appliance, $TT_m$ is the second temperature threshold of the heating m stage, $TB_m$ is the first temperature threshold of the heating m stage, $T_{SL}$ is the lower limit temperature threshold of the heating S stage, $T_{SH}$ is the upper limit temperature threshold of the heating S stage, $PW_m$ is a preset step-decreasing power regulation ratio of the heating m stage when m<S, PWs is a preset power regulation ratio in the heating S stage, and $PW_S \leq PWm$.

In specific implementation, it is necessary to use the temperature sensing device at the bottom of the cooking chamber of the household appliance to measure the temperature in the cooking chamber, and use the temperature sensing device at the top of the pot cover of the household appliance to measure the temperature in the cooking chamber. A timing device is installed in the household appliance for to count the heating time duration in real time. It is to be noted that the heating time durations of the heating m stage and the heating maintaining stage are counted independently, that is, the timing device is reset at the end of each stage, and is restarted after the next stage is entered.

It is understandable that in the heating m stage, each stage is controlled through time and temperature, and when the time threshold or temperature threshold of a certain heating stage is reached, the next heating stage may be entered. In the heating m stage, there is a corresponding power regulation ratio, and the power regulation ratio gradually decreases with the rise of temperature. When the heating temperature does not reach the heating threshold or the heating time duration does not reach the time threshold, heating is conduced according to the power regulation ratio set at the corresponding heating stage, so as to achieve the purpose of slowly approaching the target temperature. In particular, when m=S, that is, in the heating S stage, in order to control the temperature to approach the target temperature slowly, when the preset time threshold is not reached, slow heating is repeated at a low power regulation ratio. After the heating S stage is over, the household appliance approaches the target temperature, makes a prompt sound to prompt the user to put the food to be cooked in the household appliance, counts down to the target time duration to enter the heating maintaining stage. In specific implementation, the household appliance may be equipped with a buzzer to produce the effect of making a prompt sound.

After the food to be cooked is put in the household appliance, in order to make the temperature of the food to be cooked stable at the target temperature within the target time duration, it is necessary to heat slowly and repeatedly in the heating maintaining stage. Based on this, the technical solution shown in FIG. 1, where the cooking process is controlled according to the target temperature threshold parameter and the target time duration, may further include the following operation.

In the heating maintaining stage, the following judgment is made:

when t≥A, cooking is finished; and

when t<A, if TB<$T_{SL}$, heating is conducted with the power regulation ratio PW, and if TB>$T_{SH}$, heating is stopped.

is the heating time duration measured in real-time, A is the target time duration, TB is the real-time temperature detected by the temperature sensing device located at the bottom of a household appliance, $T_{SL}$ is the lower limit temperature threshold of the heating S stage, $T_{SH}$ is the upper limit temperature threshold of the heating S stage, PW is the preset power regulation ratio of the heating maintaining stage, PWs is the preset power regulation ratio of the heating S stage, and PW≤$PW_{S}$.

It is understandable that the Sous Vide cooking method requires accurate temperature control, so when the heating S stage is over and the target temperature is almost reached, after the food to be cooked is put in the household appliance, the temperature of the food to be cooked needs to approach the target temperature slowly in the heating maintaining stage, and which requires slow and repeated heating.

In the embodiments of the disclosure, the temperature compensation value is determined according to the target temperature set by the user, and then the temperature value of the target temperature is corrected according to the temperature compensation value to obtain the target temperature threshold parameter. In the cooking process, the power regulation ratio is controlled according to the target temperature threshold parameter and the target time duration, and is gradually reduced with the increase of the heating temperature, so that the temperature of food/soup is closer to the set target temperature, thereby improving the temperature control accuracy and improving the effect of cooking at a constant temperature.

Second Embodiment

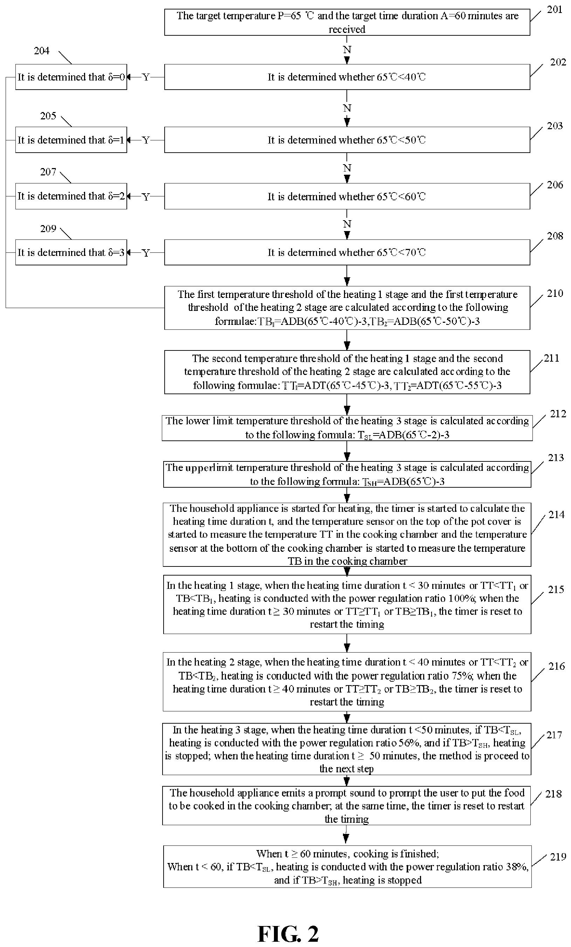

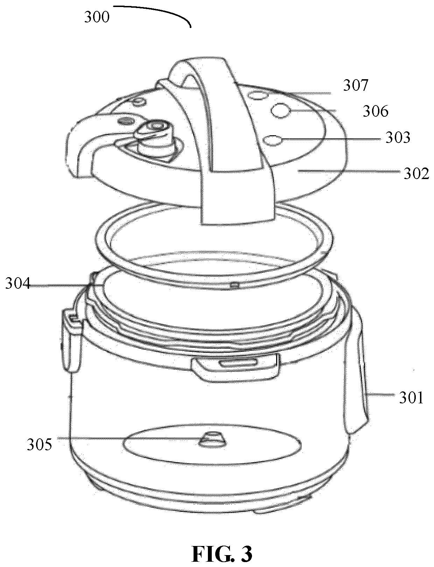

Referring to FIG. 2 that shows a specific flow of a cooking control method provided by an embodiment of the disclosure, the method may be applied to an electric pressure cooker 300 shown in FIG. 3. The electric pressure cooker 300 may include: a controller 301, a pot cover 302, a temperature sensor 303 on the top of the pot cover, a cooking chamber 304, a temperature sensor 305 at the bottom of the cooking chamber, a timer 306 and a buzzer 307. The cooked food may be put in the cooking chamber 304 in the cooking process. The timer 306, the buzzer 307 and the temperature sensor 303 on the top of the pot cover are located inside the pot cover 302. The controller 301 controls the cooking process according to the temperature in the cooking chamber detected by the temperature sensor 303 on the top of the pot cover and the temperature sensor 305 at the bottom of the cooking chamber and the heating time duration counted by the timer 306. Based on the exemplary electric pressure cooker shown in FIG. 3, the specific flow of the cooking control method may include the following steps.

At S201, the target temperature P=65°C and the target time duration A=60 minutes are received.

In specific implementation, the user inputs the target time duration and the target temperature according to the food to be cooked, and the household appliance receives the target time duration and the target temperature.

At S202, it is determined whether 65°C<40°C; if yes, jump to S204, and it is determined that δ=0, and then jump to S210; or else, jump to S203.

At S203, it is determined whether 65°C<50°C; if yes, jump to S205, and it is determined that δ=1, and then jump to S210; or else, jump to S206.

At S206, it is determined whether 65°C<60°C; if yes, jump to S207, and it is determined that δ=2, and then jump to S210; or else, jump to S208.

At S208, it is determined whether 65°C<70°C; if yes, jump to S209, and it is determined that δ=3.

At S210, the first temperature threshold $TB_1$ of the heating 1 stage and the first temperature threshold $TB_2$ of the heating 2 stage are calculated according to the following formulae:

$$TB_1 = ADB(65°C - 40°C) - 3,$$

$$TB_2=ADB(65℃-50℃)-3.$$

At S211, the second temperature threshold $TT_1$ of the heating 1 stage and the second temperature threshold $TT_2$ of the heating 2 stage are calculated according to the following formulae:

$$TT_1=ADT(65℃-45℃)-3,$$

$$TT_2=ADT(65℃-55℃)-3.$$

At S212, the lower limit temperature threshold $T_{SL}$ of the heating 3 stage is calculated according to the following formula:

$$T_{SL}=ADB(65℃-2)-3.$$

At S213, the upper limit temperature threshold $T_{SH}$ of the heating 3 stage is calculated according to the following formula:

$$T_{SH}=ADB(65℃)-3.$$

At S214, the household appliance is started for heating, the timer is started to calculate the heating time duration t, and the temperature sensor on the top of the pot cover is started to measure the temperature TT in the cooking chamber and the temperature sensor at the bottom of the cooking chamber is started to measure the temperature TB in the cooking chamber.

At S215, in the heating 1 stage, when the heating time duration t is less than 30 minutes or $TT<TT_1$ or $TB<TB_1$, heating is conducted with the power regulation ratio 100%; when the heating time duration t is more than or equal to 30 minutes or $TT≥TT_1$ or $TB≥TB_1$, the timer is reset to restart the timing, and the method is proceed to the next step.

At S216, in the heating 2 stage, when the heating time duration t is less than 40 minutes or $TT<TT_2$ or $TB<TB_2$, heating is conducted with the power regulation ratio 75%; when the heating time duration t is more than or equal to 40 minutes or $TT≥TT_2$ or $TB≥TB_2$, the timer is reset to restart the timing, and the method is proceed to the next step.

At S217, in the heating 3 stage, when the heating time duration t is less than 50 minutes, if $TB<T_{SL}$, heating is conducted with the power regulation ratio 56%, and if $TB>T_{SH}$, heating is stopped; when the heating time duration t is more than or equal to 50 minutes, the method is proceed to the next step.

At S218, the household appliance emits a prompt sound to prompt the user to put the food to be cooked in the cooking chamber, at the same time, the timer is reset to restart the timing, and the method is proceed to the next step.

At S219, when t is more than or equal to 60 minutes, cooking is finished; when t is less than 60 minutes, if $TB<T_{SL}$, heating is conducted with the power regulation ratio 38%, and if $TB>T_{SH}$, heating is stopped.

According to the method described in the embodiments of the disclosure, the temperature compensation value corresponding to the target temperature is determined, and then the preset temperature values of the heating 1 stage, the heating 2 stage and the heating 3 stage and the target temperature of the heating maintaining stage are corrected to obtain the temperature threshold parameter, so as to achieve the effect of improving the temperature accuracy. In the heating 1 stage, the heating 2 stage and the heating 3 stage, the temperature in the cooking chamber is heated to be close to the target temperature, and the power regulation ratio of the heating process decreases gradually with the rise of the temperature, so as to ensure that the temperature of the cooking chamber slowly approaches the target temperature and achieve the effect of stable temperature control. The food to be cooked is put in the cooking chamber and heated according to a low power ratio, so as to produce the effect of slowly heating the food to be cooked to the target temperature.

Third Embodiment

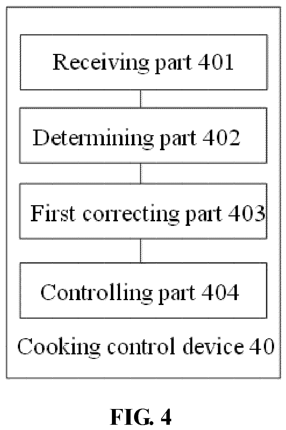

Based on the same inventive concept of the embodiment described above, referring to FIG. 4 that shows a structural schematic diagram of a cooking control device 40 provided by an embodiment of the disclosure, the cooking control device 40 may include: a receiving part 401, a determining part 402, a first correcting part 403 and a controlling part 404.

The receiving part 401 is configured to receive the target temperature and the target time duration.

The determining part 402 is configured to determine the temperature compensation value corresponding to the target temperature according to the preset relationship between the temperature range and the temperature compensation value.

The first correcting part 403 is configured to correct the temperature value of the target temperature according to the temperature compensation value to obtain the target temperature threshold parameter.

The controlling part 404 is configured to control the cooking processing according to the target temperature threshold parameter and the target time duration.

In the above solution, when the target time duration reaches a preset time threshold, a prompt signal is sent. The preset time threshold is a preset cooking time duration from a moment of starting to cook to a moment of reaching the target temperature, and the prompt signal is used to prompt the user to put in the food to be cooked.

In the above solution, the determining part 402 is specifically configured to:

when i<K, if $P<M_i$, determine that $\delta=\delta_i$, and if $M_{i+1}\geq P\geq M_i$, determine that $\delta=\delta_{i+1}$; and

when i=K, if $P<M_i$, determine that $\delta=\delta_i$, and if $P\geq M_i$, determine that $\delta=\delta i_{+1}$.

P is the target temperature, $M_i$ is the preset first step temperature value, $\delta i$ is the preset temperature compensation value, i is an integer progressively increasing from 0, K is the number of divided grades, and $\delta$ is the temperature compensation value corresponding to the target temperature.

In the above solution, the cooking process includes: the heating m stage and the heating maintaining stage. m represents a sequence number of the grade of the heating stage, which is an integer progressively increasing from 1, and the maximum value of m is S.

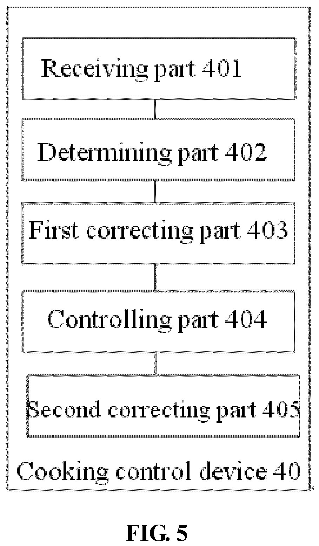

In the above solution, referring to FIG. 5, the cooking control device 40 may further include a second correcting part 405, which is configured to:
correct the preset second step temperature value and the preset third step temperature value according to the temperature compensation value to obtain the preset temperature threshold parameter. The preset temperature threshold parameters include the first temperature threshold and the second temperature threshold.

In the above solution, the second correcting part 405 is specifically configured to:
when m<S, calculate the first temperature threshold of the heating m stage according to formula 5:

$$TB_m=ADB(P-PB_m)-\delta \ 5),$$

wherein P is the target temperature, $PB_m$ is the preset second step temperature value of the heating m stage, and $P>PB_m$, $TB_m$ is the first temperature threshold of the heating m stage, $\delta$ is the temperature compensation value corresponding to the target temperature, and ADB represents the calculation of the migration temperature of the temperature sensing device located at the bottom of the household appliance;

when m<S, calculate the second temperature threshold of the heating m stage according to formula 6:

$$TT_m=ADT(P-PT_m)-\delta \ 6),$$

wherein P is the target temperature, $PT_m$ is the preset third step temperature value of the heating m stage, and $P>PT_m$, $TT_m$ is the second temperature threshold of the heating m stage, $\delta$ is the temperature compensation value corresponding to the target temperature, and ADT represents the calculation of the migration temperature of the temperature sensing device located at the top of the household appliance.

In the above solution, the first correcting part 403 is specifically configured to:
when m=S, calculate the lower limit temperature threshold of the heating S stage according to formula 7:

$$T_{SL}=ADB(P-2)-\delta \qquad 7),$$

wherein $T_{SL}$ is the lower limit temperature threshold of the heating S stage, P is the target temperature, $\delta$ is the temperature compensation value corresponding to the target temperature, and ADB represents the calculation of the migration temperature of the temperature sensing device located at the bottom of the household appliance;

when m=S, calculate the upper limit temperature threshold in the heating S stage according to formula 8:

$$T_{SH}=ADB(P)-\delta \qquad 8),$$

wherein the target temperature threshold parameters include the upper limit temperature threshold and the lower limit temperature threshold, $T_{SH}$ is the upper limit temperature threshold in the heating S stage, P is the target temperature, $\delta$ is the temperature compensation value corresponding to the target temperature, and ADB represents the calculation of the migration temperature of the temperature sensing device located at the bottom of the household appliance.

In the above solution, the controlling part 404 is specifically configured to:

when m<S, make the following judgment:

when $t \geq t_m$ or $TT \geq TT_m$ or $TB \geq TB_m$, the heating m+1 stage is entered;

when $t < t_m$ or $TT < TT_m$ or $TB < TB_m$, heating is conducted with the power regulation ratio $PW_m$;

when m=S, make the following judgment:

when $t \geq t_S$, the heating maintaining stage is entered; and

when t<ts, if $TB < T_{SL}$, heating is conducted with the power regulation ratio PWs, and if $TB > T_{SH}$, heating is stopped.

is the heating time duration measured in real-time, $t_m$ is the preset time threshold of the heating m stage, TB is the real-time temperature detected by the temperature sensing device located at the bottom of a household appliance, TT is the real-time temperature detected by the temperature sensing device located at the top of the household appliance, $TT_m$ is the second temperature threshold of the heating m stage, $TB_m$ is the first temperature threshold of the heating m stage, $T_{SL}$ is the lower limit temperature threshold of the heating S stage, $T_{SH}$ is the upper limit temperature threshold of the heating S stage, $PW_m$ is the preset step-decreasing power regulation ratio of the heating m stage when m<S, PWs is the preset power regulation ratio in the heating S stage, and $PW_S \leq PW_m$.

In the above solution, the controlling part 404 is specifically configured to:

in the heating maintaining stage, make the following judgment:

when $t \geq A$, cooking is finished; and

when t<A, if $TB < T_{SL}$, heating is conducted with the power regulation ratio PW, and if $TB > T_{SH}$, heating is stopped.

is the heating time duration measured in real-time, A is the target time duration, TB is the real-time temperature detected by the temperature sensing device located at the bottom of a household appliance, $T_{SL}$ is the lower limit temperature threshold of the heating S stage, $T_{SH}$ is the upper limit temperature threshold of the heating S stage, PW is the preset power regulation ratio of the heating maintaining stage, PWs is the preset power regulation ratio of the heating S stage, and $PW \leq PW_S$.

Understandably, in the present embodiment, the "part" may be a part of circuit, a part of processor, a part of program or software, etc., of course, it may be a unit, and it may also be a module or non-modular.

Moreover, all parts in the present embodiment may be integrated in a processing unit; or the units exist separately and physically; or two or more than two units are integrated in a unit. The integrated unit may be realized in form of hardware or in form of software function module. If the integrated units are implemented by software function modules and are not sold or used as independent products, they can also be stored in a computer readable storage medium.

Based on this understanding, the technical solution of the present embodiment substantially or the part making a contribution to the traditional art can be embodied in the form of software product; the computer software product is stored in a storage medium and includes a number of instructions to make a computer device (which can be a personal computer, a server or a network device, etc.) of a processor perform all or part of the steps of the method in the embodiments. The above storage medium includes: a USB flash disk, a mobile hard disk, a Read Only Memory (ROM), a Random Access Memory (RAM), a magnetic disk or a compact disc, and other media which can store program codes.

Therefore, the embodiments of the disclosure provide a computer storage medium, on which a cooking control program is stored When the cooking control program is executed by at least one processor, the steps of the method in embodiment 1 are implemented.

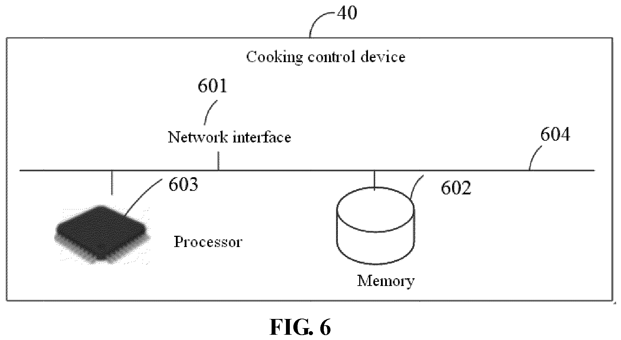

Based on the cooking control device 40 and the computer storage medium 2, referring to FIG. 6 that shows a specific hardware structure of the cooking control device 40 provided by an embodiment of the disclosure, the cooking control device may include: a network interface 601, a memory 602 and a processor 603. These components are coupled together through a bus system 604. It may be understood that the bus system 604 is configured to implement connection communication among these components. The bus system 604 includes a data bus and further includes a power bus, a control bus and a state signal bus. However, for clear description, various buses in FIG. 6 are shown as the bus system 604. The network interface 601 is configured to receive and send a signal during the course of receiving messages from other external network elements and sending messages to other external network elements.

The memory 602 is configured to store a computer program executable on the processor 603.

The processor 603 is configured to perform, when the computer program is executed by the processor, the following operations:

the target temperature and the target time duration are received;

the temperature compensation value corresponding to the target temperature is determined according to the preset relationship between the temperature range and the temperature compensation value;

the temperature value of the target temperature is corrected according to the temperature compensation value to obtain the target temperature threshold parameter;

the cooking processing is controlled according to the target temperature threshold parameter and the target time duration.

It is understandable that the memory 602 in the embodiment of the disclosure may be a volatile memory or a nonvolatile memory, or may include both the volatile and nonvolatile memories. The nonvolatile memory may be an ROM, a Programmable ROM (PROM), an Erasable PROM (EPROM), an Electrically EPROM (EEPROM) or a flash memory. The volatile memory may be an RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). The memory 602 of a system and method described in the disclosure is intended to include, but not limited to, memories of these and any other proper types.

The processor 603 may be an integrated circuit chip and has a signal processing capability. In an implementation process, the steps of the method may be accomplished by an integrated logic circuit of hardware in the processor 603 or an instruction in a software form. The processor 603 may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or executed. The universal processor may be a microprocessor, or the processor may also be any conventional processor and the like. The steps of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as an RAM, a flash memory, an ROM, a PROM or EEPROM and a register. The storage medium is located in the memory 602. The processor 603 reads information from the memory 602 and completes the steps of the above method in combination with the hardware of the processor.

It is understandable that these embodiments described here may be implemented by hardware, software, firmware, middleware, microcode, or a combination thereof. For hardware implementation, the processing unit may be realized in one or more of an ASIC, a DSP, a DSP Device (DSPD), a Programmable Logic Device (PLD), an FPGA, a universal processor, a controller, a micro-controller, a microprocessor, other electronic units for implementing the functions of the application or a combination thereof.

For software implementation, the technology described in the specification can be implemented through modules (such as procedures and functions) that perform the functions described in the specification. A software code can be stored in the memory and executed by the processor. The memory can be implemented in or outside the processor.

Specifically, the processor 603 in the cooking control device 40 is further configured to perform, when running the computer program, the steps of the method in embodiment 1, which will not be repeated here.

Those skilled in the art should understand that the embodiments of the disclosure may be provided as a method, a system, or a computer program product. So, the disclosure may adopt the forms of a hardware embodiment, a software embodiment, or an embodiment combining software and hardware. Moreover, the disclosure may adopt the form of a computer program product which is implemented on one or more computer available storage media (including, not limited to, a magnetic disk memory or an optical memory) including computer available program codes.

The disclosure is described according to the flowcharts and/or block diagrams of the method, the device (system) and the computer program product in the embodiments of the disclosure. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the specified functions in one or more flows of the flowchart and/or one or more blocks of the block diagram.

The above is only the preferred embodiments of the disclosure and not intended to limit the protection scope of the invention, which is defined in the appended claims.

INDUSTRIAL APPLICABILITY

In the embodiments of the disclosure, the target temperature and the target time duration are received, the temperature compensation value corresponding to the target temperature is determined according to the preset relationship between the temperature range and the temperature compensation value, the temperature value of the target temperature is corrected according to the temperature compensation value to obtain the target temperature threshold parameter, and the cooking processing is controlled according to the target temperature threshold parameter and the target time duration; in this way, through the temperature compensation scheme of the disclosure, the temperature of food/soup is closer to the set target temperature, thereby improving the temperature control accuracy and improving an effect of cooking at a constant temperature.

**Claims**

1. A cooking control method, comprising:

   (S101) receiving a target temperature and a target time duration;
   (S102) determining a temperature compensation value corresponding to the target temperature according to a preset relationship between a temperature range and the temperature compensation value, wherein (S102) determining the temperature compensation value corresponding to the target temperature according to the preset relationship between the temperature range and the temperature compensation value comprises:

   when $i<K$, if $P<M_i$, determining that $\delta=\delta_i$, and if $M_{i+1} \geq P \geq Mi$, determining that $\delta=\delta_{i+1}$;
   when $i=K$, if $P<M_i$, determining that $\delta=\delta_i$, and if $P \geq M_i$, determining that $\delta=\delta_{i+1}$;
   wherein $P$ is the target temperature, $M_i$ is a preset first step temperature value, $\delta_i$ is a preset temperature compensation value, $i$ is an integer progressively increasing from 0, $K$ is a number of divided grades, and $\delta$ is the temperature compensation value corresponding to the target temperature;
   (S103) correcting a temperature value of the target temperature according to the temperature compensation value in order to obtain a target temperature threshold parameter; and

(S104) controlling a cooking processing according to the target temperature threshold parameter and the target time duration.

2. The method of claim 1, wherein when the target time duration reaches a preset time threshold, sending a prompt signal, wherein the preset time threshold is a preset cooking time duration from a moment cooking is started to a moment the target temperature is reached, and the prompt signal is used to prompt a user to put in a food to be cooked.

3. The method of any one of claims 1 to 2, wherein the cooking process comprises: a heating m stage and a heating maintaining stage; wherein m represents a sequence number of a grade of the heating stage, and m is an integer progressively increasing from 1 with a maximum value S; wherein after (S102) determining the temperature compensation value corresponding to the target temperature according to the preset relationship between the temperature range and the temperature compensation value, the method preferably further comprises:
correcting a preset second step temperature value and a preset third step temperature value according to the temperature compensation value to obtain preset temperature threshold parameters, wherein the preset temperature threshold parameters comprise a first temperature threshold and a second temperature threshold.

4. The method of claim 3, wherein correcting the preset second step temperature value and the preset third step temperature value according to the temperature compensation value to obtain the preset temperature threshold parameters comprises:

(S210) when m<S, calculating the first temperature threshold of the heating m stage according to the following formula 1):

$$TB_m = ADB(P-PB_m)-\delta \qquad 1),$$

wherein P is the target temperature, $PB_m$ is the preset second step temperature value of the heating m stage, and $P>PB_m$, $TB_m$ is the first temperature threshold of the heating m stage, $\delta$ is the temperature compensation value corresponding to the target temperature, and ADB represents the calculation of a migration temperature of a temperature sensing device located at a bottom of a household appliance;
(S211) when m<S, calculating the second temperature threshold of the heating m stage according to the following formula 2):

$$TT_m = ADT(P-PT_m)-\delta \qquad 2),$$

wherein P is the target temperature, $PT_m$ is the preset third step temperature value of the heating m stage, and $P>PT_m$, $TT_m$ is the second temperature threshold of the heating m stage, $\delta$ is the temperature compensation value corresponding to the target temperature, and ADT represents the calculation of a migration temperature of a temperature sensing device located at a top of the household appliance.

5. The method of any one of claims 1 to 4, wherein (S103) correcting the temperature value of the target temperature according to the temperature compensation value in order to obtain a target temperature threshold parameter comprises:

(S212) when m=S, calculating a lower limit temperature threshold in a heating S stage according to the following formula 3):

$$T_{SL} = ADB(P-2)-\delta \qquad 3),$$

wherein $T_{SL}$ is the lower limit temperature threshold of the heating S stage, P is the target temperature, $\delta$ is the temperature compensation value corresponding to the target temperature, and ADB represents the calculation of the migration temperature of the temperature sensing device located at the bottom of the household appliance;
(S213) when m=S, calculating an upper limit temperature threshold of the heating S stage according to the formula 4):

$$T_{SH}=ADB(P)-\delta \qquad\qquad 4),$$

wherein the target temperature threshold parameters comprise the upper limit temperature threshold and the lower limit temperature threshold, $T_{SH}$ is the upper limit temperature threshold of the heating S stage, P is the target temperature, $\delta$ is the temperature compensation value corresponding to the target temperature, and ADB represents the calculation of the migration temperature of the temperature sensing device located at the bottom of the household appliance.

6. The method of any one of claims 1 to 5, wherein (S104) controlling the cooking process according to the target temperature threshold parameter and the target time duration comprises:
(S215 and S216) when m<S, making the following judgment:

when $t \geq t_m$ or $TT \geq TT_m$ or $TB \geq TB_m$, entering a heating m+1 stage;
when $t < t_m$ or $TT < TT_m$ or $TB < TB_m$, heating with a power regulation ratio $PW_m$;
(S217) when m=S, making the following judgment:

when $t \geq t_S$, entering a heating maintaining stage;
when t<ts, if $TB < T_{SL}$, heating with the power regulation ratio PWs, and if $TB > T_{SH}$, stopping heating;
wherein t is a heating time duration measured in real-time, $t_m$ is the preset time threshold of the heating m stage, TB is a real-time temperature detected by the temperature sensing device located at the bottom of a household appliance, TT is a real-time temperature detected by the temperature sensing device located at the top of the household appliance, $TT_m$ is the second temperature threshold of the heating m stage, $TB_m$ is the first temperature threshold of the heating m stage, $T_{SL}$ is the lower limit temperature threshold of the heating S stage, $T_{SH}$ is the upper limit temperature threshold of the heating S stage, $PW_m$ is a preset step-decreasing power regulation ratio of the heating m stage when m<S, PWs is a preset power regulation ratio of the heating S stage, and $PW_S \leq PW_m$;

and/or,
wherein (S104) controlling the cooking process according to the target temperature threshold parameter and the target time duration further comprises:
(S219) in the heating maintaining stage, making the following judgment:

when $t \geq A$, finishing cooking;
when t<A, if $TB < T_{SL}$, heating with the power regulation ratio PW, and if $TB > T_{SH}$, stopping heating;
wherein t is the heating time duration measured in real-time, A is the target time duration, TB is the real-time temperature detected by the bottom temperature monitoring device of the household appliance, $T_{SL}$ is the lower limit temperature threshold of the heating S stage, $T_{SH}$ is the upper limit temperature threshold of the heating S stage, PW is the preset power regulation ratio of the heating maintaining stage, PWs is the preset power regulation ratio of the heating S stage, and $PW \leq PW_S$.

7. A cooking control device (40), comprising: a receiving part (401), a determining part (402), a first correcting part (403) and a control part (404); wherein,
the receiving part (401) is configured to receive a target temperature and a target time duration; the determining part (402) is configured to determine a temperature compensation value corresponding to the target temperature, according to a preset relationship between a temperature range and the temperature compensation value, wherein the determining part (402) is specifically configured to:

when i<K, if $P < M_i$, determine that $\delta = \delta_i$; if $M_{i+1} \geq P \geq M_i$, determine that $\delta = \delta_{i+1}$;
when i=K, if $P < M_i$, determine that $\delta = \delta_i$; if $P \geq M_i$, determine that $\delta = \delta_{i+1}$;
wherein P is the target temperature, $M_i$ is a preset first step temperature value, $\delta_i$ is a preset temperature compensation value, i is an integer progressively increasing from 0, K is a number of divided grades, and $\delta$ is the temperature compensation value corresponding to the target temperature;
the first correcting part (403) is configured to correct a temperature value of the target temperature according to the temperature compensation value in order to obtain a target temperature threshold parameter; and
the controlling part (404) is configured to control a cooking processing according to the target temperature threshold parameter and the target time duration;

8. The device of claim 7, wherein the cooking process comprises: a heating m stage and a heating maintaining stage; m represents a sequence number of a grade of the heating stage, and m is an integer progressively increasing from 1 with a maximum value S.

9. The device of any one of claims 7 to 8, further comprising a second correcting part (405), configured to: correct a preset second step temperature value and a preset third step temperature value according to the temperature compensation value in order to obtain preset temperature threshold parameters, wherein the preset temperature threshold parameters comprise a first temperature threshold and a second temperature threshold; wherein the second correcting part (405) is preferably specifically configured to:

when m<S, calculate the first temperature threshold of the heating m stage according to the following formula 5):

$$TB_m = ADB(P-PB_m) - \delta \qquad 5),$$

wherein P is the target temperature, $PB_m$ is the preset second step temperature value of the heating m stage, and $P > PB_m$, $TB_m$ is the first temperature threshold of the heating m stage, $\delta$ is the temperature compensation value corresponding to the target temperature, and ADB represents the calculation of a migration temperature of a temperature sensing device located at a bottom of a household appliance; when m<S, calculate the second temperature threshold of the heating m stage according to the following formula 6):

$$TT_m = ADT(P-PT_m) - \delta \qquad 6),$$

wherein P is the target temperature, $PT_m$ is the preset third step temperature value of the heating m stage, and $P > PT_m$, $TT_m$ is the second temperature threshold of the heating m stage, $\delta$ is the temperature compensation value corresponding to the target temperature, and ADT represents the calculation of a migration temperature of a temperature sensing device located at a top of the household appliance.

10. The device of any one of claims 7 to 9, wherein the first correcting part (403) is specifically configured to:

when m=S, calculate a lower limit temperature threshold in a heating S stage according to the following formula 7):

$$T_{SL} = ADB(P-2) - \delta \qquad 7),$$

wherein $T_{SL}$ is the lower limit temperature threshold of the heating S stage, P is the target temperature, $\delta$ is the temperature compensation value corresponding to the target temperature, and ADB represents the calculation of the migration temperature of the temperature sensing device located at the bottom of the household appliance; when m=S, calculate an upper limit temperature threshold of the heating S stage according to the following formula 8):

$$T_{SH} = ADB(P) - \delta \qquad 8),$$

wherein the target temperature threshold parameters comprise the upper limit temperature threshold and the lower limit temperature threshold, $T_{SH}$ is the upper limit temperature threshold of the heating S stage, P is the target temperature, $\delta$ is the temperature compensation value corresponding to the target temperature, and ADB represents the calculation of the migration temperature of the temperature sensing device located at the bottom of the household appliance.

11. The device of any one of claims 7 to 10, wherein the controlling part (404) is specifically configured to: when m<S, make the following judgment:

when $t \geq t_m$ or $TT \geq TT_m$ or $TB \geq TB_m$, entering a heating m+1 stage; when $t < t_m$ or $TT < TT_m$ or $TB < TB_m$, heating with a power regulation ratio $PW_m$; when m=S, make the following judgment:

when $t \geq t_S$, entering a heating maintaining stage;

when t<ts, if $TB<T_{SL}$, heating with the power regulation ratio PWs, and if $TB>T_{SH}$, stopping heating;

wherein t is a heating time duration measured in real time, $t_m$ is the preset time threshold of the heating m stage, TB is a real-time temperature detected by the temperature sensing device located at the bottom of a household appliance, TT is a real-time temperature detected by the temperature sensing device located at the top of the household appliance, $TT_m$ is the second temperature threshold of the heating m stage, $TB_m$ is the first temperature threshold of the heating m stage, $T_{SL}$ is the lower limit temperature threshold of the heating S stage, $T_{SH}$ is the upper limit temperature threshold of the heating S stage, $PW_m$ is a preset step-decreasing power regulation ratio of the heating m stage when m<S, PWs is a preset power regulation ratio of the heating S stage, and $PW_S \leq PW_m$;

and/or,

wherein the controlling part (404) is specifically configured to:

in the heating maintaining stage, make the following judgment:

when $t \geq A$, finishing cooking;

when t<A, if $TB<T_{SL}$, heating with the power regulation ratio PW, and if $TB>T_{SH}$, stopping heating;

wherein t is the heating time duration measured in real time, A is the target time duration, TB is the real-time temperature detected by the bottom temperature monitoring device of the household appliance, $T_{SL}$ is the lower limit temperature threshold of the heating S stage, $T_{SH}$ is the upper limit temperature threshold of the heating S stage, PWs is the preset power regulation ratio of the heating S stage, and $PW \leq PW_s$.

12. A cooking control device (40), comprising: a network interface (601), a memory (602) and a processor (603);

wherein the network interface (601) is configured to receive and send a signal during a course of receiving and sending messages from and to other external network elements;

the memory (602) is configured to store a computer program executable on the processor (603);

the processor (603) is configured to perform steps of a method of any one of claims 1 to 6 when the computer program is executed by the processor (603),.

13. A computer storage medium (2), on which a cooking control program is stored, wherein when the cooking control program is executed by at least one processor (603), steps of a method of any one of claims 1 to 6 are implemented.

**Patentansprüche**

1. Kochsteuerverfahren, umfassend

(S101) Empfangen einer Zieltemperatur und einer Zielzeitdauer;

(S102) Bestimmen eines der Zieltemperatur entsprechenden Temperaturkompensationswertes gemäß einer voreingestellten Beziehung zwischen einem Temperaturbereich und dem Temperaturkompensationswert, wobei (S102) das Bestimmen des der Zieltemperatur entsprechenden Temperaturkompensationswertes gemäß der voreingestellten Beziehung zwischen dem Temperaturbereich und dem Temperaturkompensationswert Folgendes umfasst:

wenn i<K, falls $P<M_i$, Bestimmen, dass $\delta=\delta_i$, und falls $M_{i+1} \geq P \geq M_i$, Bestimmen, dass $\delta=\delta_{i+1}$;

wenn i=K, falls $P<M_i$, Bestimmen, dass $\delta=\delta_i$, und falls $P \geq M_i$, Bestimmen, dass $\delta=\delta_{i+1}$;

wobei P die Zieltemperatur ist, $M_i$ ein voreingestellter Temperaturwert der ersten Stufe ist, $\delta_i$ ein voreingestellter Temperaturkompensationswert ist, i eine progressiv von 0 ansteigende ganze Zahl ist, K eine Anzahl von unterteilten Graden ist und $\delta$ der der Zieltemperatur entsprechende Temperaturkompensationswert ist;

(S103) Korrigieren eines Temperaturwerts der Zieltemperatur gemäß dem Temperaturkompensationswert, um einen Zieltemperaturschwellenparameter zu erhalten; und

(S104) Steuern eines Kochvorgangs gemäß dem Zieltemperaturschwellenparameter und der Zielzeitdauer.

2. Verfahren gemäß Anspruch 1, wobei, wenn die Zielzeitdauer eine voreingestellte Zeitschwelle erreicht, ein Aufforderungssignal gesendet wird, wobei die voreingestellte Zeitschwelle eine voreingestellte Kochzeitdauer von einem Moment, an dem der Kochvorgang gestartet wird, bis zu einem Moment, an dem die Zieltemperatur erreicht wird, ist, und das Aufforderungssignal verwendet wird, um einen Benutzer aufzufordern, ein zu kochendes Lebensmittel einzulegen.

3. Verfahren gemäß einem der Ansprüche 1 bis 2, wobei der Kochvorgang Folgendes umfasst: eine Heizstufe m und eine Hitzeerhaltungsstufe; wobei m eine Sequenznummer eines Grades der Heizstufe darstellt und m eine ganze Zahl ist, die progressiv von 1 mit einem Maximalwert S ansteigt; wobei nach (S102) Bestimmen des der Zieltemperatur entsprechenden Temperaturkompensationswerts gemäß der voreingestellten Beziehung zwischen dem Temperaturbereich und dem Temperaturkompensationswert, das Verfahren vorzugsweise ferner Folgendes umfasst: Korrigieren eines voreingestellten Temperaturwertes der zweiten Stufe und eines voreingestellten Temperaturwertes der dritten Stufe gemäß dem Temperaturkompensationswert, um voreingestellte Temperaturschwellenparameter zu erhalten, wobei die voreingestellten Temperaturschwellenparameter eine erste Temperaturschwelle und eine zweite Temperaturschwelle umfassen.

4. Verfahren gemäß Anspruch 3, wobei das Korrigieren des voreingestellten Temperaturwerts der zweiten Stufe und des voreingestellten Temperaturwerts der dritten Stufe gemäß dem Temperaturkompensationswert, um die voreingestellten Temperaturschwellenparameter zu erhalten, Folgendes umfasst:

(S210) wenn m<S, Berechnen der ersten Temperaturschwelle der Heizstufe m gemäß der folgenden Formel 1):

$$TB_m=ADB(P-PB_m)- \delta \qquad 1),$$

wobei P die Zieltemperatur ist, $PB_m$ der voreingestellte Temperaturwert der zweite Stufe der Heizstufe m ist, und $P>PB_m$, $TB_m$ die erste Temperaturschwelle der Heizstufe m ist, $\delta$ der der Zieltemperatur entsprechende Temperaturkompensationswert ist, und ADB die Berechnung einer Migrationstemperatur einer sich an einem Boden eines Haushaltsgeräts befindlichen Temperaturerfassungsvorrichtung darstellt;
(S211) wenn m<S, Berechnen der zweiten Temperaturschwelle der Heizstufe m gemäß der folgenden Formel 2):

$$TT_m=ADT(P-PT_m)-\delta \qquad 2),$$

wobei P die Zieltemperatur ist, $PT_m$ der voreingestellte Temperaturwert der dritten Stufe der Heizstufe m ist und $P>PT_m$, $TT_m$ die zweite Temperaturschwelle der Heizstufe m ist, $\delta$ der der Zieltemperatur entsprechende Temperaturkompensationswert ist, und ADT die Berechnung einer Migrationstemperatur einer sich an einer Oberseite des Haushaltsgerätes befindlichen Temperaturerfassungsvorrichtung darstellt.

5. Verfahren gemäß einem der Ansprüche 1 bis 4, wobei (S103) das Korrigieren des Temperaturwerts der Zieltemperatur gemäß dem Temperaturkompensationswert, um einen Zieltemperaturschwellenparameter zu erhalten, Folgendes umfasst:

(S212) wenn m=S, Berechnen einer unteren Grenztemperaturschwelle in einer Heizstufe S gemäß der folgenden Formel 3):

$$T_{SL} =ADB(P-2)-\delta \qquad 3),$$

wobei $T_{SL}$ die untere Grenztemperaturschwelle der Heizstufe S ist, P die Zieltemperatur ist, $\delta$ der der Zieltemperatur entsprechende Temperaturkompensationswert ist, und ADB die Berechnung der Migrationstemperatur der sich am Boden des Haushaltsgeräts befindlichen Temperaturerfassungsvorrichtung darstellt;
(S213) wenn m=S, Berechnen einer oberen Grenztemperaturschwelle der Heizstufe S gemäß der Formel 4):

$$T_{SH}=ADB(P)-\delta \qquad 4),$$

wobei die Zieltemperaturschwellenparameter die obere Grenztemperaturschwelle und die untere Grenztemperaturschwelle umfassen, $T_{SH}$ die obere Grenztemperaturschwelle der Heizstufe S ist, P die Zieltemperatur ist, $\delta$ der der Zieltemperatur entsprechende Temperaturkompensationswert ist, und ADB die Berechnung der Migrationstemperatur der sich am Boden des Haushaltsgeräts befindlichen Temperaturerfassungsvorrichtung darstellt.

6. Verfahren gemäß einem der Ansprüche 1 bis 5, wobei (S104) das Steuern des Kochvorgangs gemäß dem Zieltemperaturschwellenparameter und der Zielzeitdauer Folgendes umfasst:
(S215 und S216), wenn m<S, Durchführung der folgenden Beurteilung:

wenn $t{\geq}t_m$ oder $TT{\geq}TT_m$ oder $TB{\geq}TB_m$, Eintritt in eine Heizstufe m+ 1;
wenn $t{<}t_m$ oder $TT{<}TT_m$ oder $TB{<}TB_m$, Heizen mit einem Leistungsregelungsverhältnis $PW_m$;
(S217) wenn m=S, Durchführung der folgenden Beurteilung:

wenn $t{\geq}t_s$, Eintritt in eine Hitzeerhaltungsstufe;
wenn $t{<}t_s$, falls $TB{<}T_{SL}$, Heizen mit dem Leistungsregelungsverhältnis $PW_s$, und falls $TB{>}T_{SH}$, Beenden des Heizens;
wobei t eine in Echtzeit gemessene Heizzeitdauer ist, $t_m$ die voreingestellte Zeitschwelle der Heizstufe m ist, TB eine von der an dem Boden eines Haushaltsgeräts befindlichen Temperaturerfassungsvorrichtung erfasste Echtzeittemperatur ist, TT eine von der an der Oberseite des Haushaltsgeräts befindlichen Temperaturerfassungsvorrichtung erfasste Echtzeittemperatur ist, $TT_m$ die zweite Temperaturschwelle der Heizstufe m ist, $TB_m$ die erste Temperaturschwelle der Heizstufe m ist, $T_{SL}$ die untere Grenztemperaturschwelle der Heizstufe S ist, $T_{SH}$ die obere Grenztemperaturschwelle der Heizstufe S ist, $PW_m$ ein voreingestelltes stufenweise abnehmendes Leistungsregelungsverhältnis der Heizstufe m ist, wenn m<S, $PW_S$ ein voreingestelltes Leistungsregelungsverhältnis der Heizstufe S ist und $PW_S{\leq}PW_m$;
und/oder,
wobei (S104) das Steuern des Kochvorgangs gemäß dem Zieltemperaturschwellenparameter und der Zielzeitdauer ferner Folgendes umfasst:
(S219) in der Hitzeerhaltungsstufe, Durchführung der folgenden Beurteilung:

wenn $t{\geq}A$, Beenden des Kochens;
wenn $t{<}A$, falls $TB{<}T_{SL}$, Heizen mit dem Leistungsregelungsverhältnis PW, und falls $TB{>}T_{SH}$, Beenden des Heizens;
wobei t die in Echtzeit gemessene Heizzeitdauer ist, A die Zielzeitdauer ist, TB die von der Bodentemperaturüberwachungsvorrichtung des Haushaltsgeräts erfasste Echtzeittemperatur ist, $T_{SL}$ die untere Grenztemperaturschwelle der Heizstufe S ist, $T_{SH}$ die obere Grenztemperaturschwellen der Heizstufe S ist, PW das voreingestellte Leistungsregelungsverhältnis der Hitzeerhaltungsstufe ist, $PW_s$ das voreingestellte Leistungsregelungsverhältnis der Heizstufe S ist und $PW{\leq}PW_S$.

7. Kochsteuervorrichtung (40), umfassend: einen Empfangsteil (401), einen Bestimmungsteil (402), einen ersten Korrekturteil (403) und einen Steuerteil (404); wobei
der Empfangsteil (401) so konfiguriert ist, dass er eine Zieltemperatur und eine Zielzeitdauer empfängt; der Bestimmungsteil (402) so konfiguriert ist, dass er einen der Zieltemperatur entsprechenden Temperaturkompensationswert gemäß einer voreingestellten Beziehung zwischen einem Temperaturbereich und dem Temperaturkompensationswert bestimmt, wobei der Bestimmungsteil (402) insbesondere so konfiguriert ist, dass:

wenn i<K, falls $P{<}M_i$, Bestimmen, dass $\delta{=}\delta_i$; falls $M_{i+1}{\geq}P{\geq}M_i$, Bestimmen, dass $\delta{=}\delta_{i+1}$;
wenn i=K, falls $P{<}M_i$, Bestimmen, dass $\delta{=}\delta_i$; falls $P{\geq}M_i$, Bestimmen, dass $\delta{=}\delta_{i+1}$; wobei P die Zieltemperatur ist, $M_i$ ein voreingestellter Temperaturwert der ersten Stufe ist, $\delta_i$ ein voreingestellter Temperaturkompensationswert ist, i eine progressiv von 0 ansteigende ganze Zahl ist, K eine Anzahl von unterteilten Graden ist und $\delta$ der der Zieltemperatur entsprechende Temperaturkompensationswert ist;
der erste Korrekturteil (403) so konfiguriert ist, dass er einen Temperaturwert der Zieltemperatur gemäß dem Temperaturkompensationswert korrigiert, um einen Zieltemperaturschwellenparameter zu erhalten; und
der Steuerteil (404) so konfiguriert ist, dass er einen Kochvorgang gemäß dem Zieltemperaturschwellenparameter und der Zielzeitdauer steuert;

8. Vorrichtung gemäß Anspruch 7, wobei der Kochvorgang Folgendes umfasst: eine Heizstufe m und eine Hitzeerhaltungsstufe; m eine Sequenznummer eines Grades der Heizstufe darstellt, und m ist eine ganze Zahl, die progressiv von 1 mit einem Maximalwert S ansteigt.

9. Vorrichtung gemäß einem der Ansprüche 7 bis 8, ferner umfassend einen zweiten Korrekturteil (405), der so konfiguriert ist, dass er:
einen voreingestellten Temperaturwert der zweiten Stufe und einen voreingestellten Temperaturwert der dritten Stufe gemäß dem Temperaturkompensationswert korrigiert, um voreingestellte Temperaturschwellenparameter zu erhalten, wobei die voreingestellten Temperaturschwellenparameter eine erste Temperaturschwelle und eine zweite Temperaturschwelle umfassen; wobei der zweite Korrekturteil (405) vorzugsweise speziell so konfiguriert ist, dass er:

wenn m<S, die erste Temperaturschwelle der Heizstufe m nach der folgenden Formel 5) berechnet:

$$TB_m = ADB(P - PB_m) - \delta \qquad 5),$$

wobei P die Zieltemperatur ist, $PB_m$ der voreingestellte Temperaturwert der zweiten Stufe der Heizstufe m ist und $P > PB_m$ ist, $TB_m$ die erste Temperaturschwelle der Heizstufe m ist, $\delta$ der der Zieltemperatur entsprechende Temperaturkompensationswert ist, und ADB die Berechnung einer Migrationstemperatur einer sich an einem Boden eines Haushaltsgeräts befindlichen Temperaturerfassungsvorrichtung darstellt;
wenn m<S, die zweite Temperaturschwelle der Heizstufe m gemäß der folgenden Formel 6) berechnet:

$$TT_m = ADT(P - PT_m) - \delta \qquad 6),$$

wobei P die Zieltemperatur ist, $PT_m$ der voreingestellte Temperaturwert der dritten Stufe der Heizstufe m ist, und $P > PT_m$, $TT_m$ die zweite Temperaturschwelle der Heizstufe m ist, $\delta$ der der Zieltemperatur entsprechende Temperaturkompensationswert ist und ADT die Berechnung einer Migrationstemperatur einer sich an einer Oberseite des Haushaltsgeräts befindlichen Temperaturerfassungsvorrichtung darstellt.

10. Vorrichtung gemäß einem der Ansprüche 7 bis 9, wobei der erste Korrekturteil (403) speziell so konfiguriert ist, dass er:

wenn m=S, eine untere Grenztemperaturschwelle in einer Heizstufe S gemäß der folgenden Formel 7) berechnet:

$$T_{SL} = ADB(P - 2) - \delta \qquad 7),$$

wobei $T_{SL}$ die untere Grenztemperaturschwelle der Heizstufe S ist, P die Zieltemperatur ist, $\delta$ der der Zieltemperatur entsprechende Temperaturkompensationswert ist und ADB die Berechnung der Migrationstemperatur der sich am Boden des Haushaltsgeräts befindlichen Temperaturerfassungsvorrichtung darstellt;
wenn m=S, eine obere Grenztemperaturschwelle der Heizstufe S gemäß der folgenden Formel 8) berechnet:

$$T_{SH} = ADB(P) - \delta \qquad 8),$$

wobei die Zieltemperaturschwellenparameter die obere Grenztemperaturschwelle und die untere Grenztemperaturschwelle umfassen, $T_{SH}$ die obere Grenztemperaturschwelle der Heizstufe S ist, P die Zieltemperatur ist, $\delta$ der der Zieltemperatur entsprechende Temperaturkompensationswert ist und ADB die Berechnung der Migrationstemperatur der sich am Boden des Haushaltsgeräts befindlichen Temperaturerfassungsvorrichtung darstellt.

11. Vorrichtung gemäß einem der Ansprüche 7 bis 10, wobei der Steuerteil (404) speziell so konfiguriert ist, dass er:
wenn m<S, die folgende Beurteilung durchführt:

wenn $t \geq t_m$ oder $TT \geq TT_m$ oder $TB \geq TB_m$, Eintritt in eine Heizstufe m+ 1;
wenn $t < t_m$ oder $TT < TT_m$ oder $TB < TB_m$, Heizen mit einem Leistungsregelungsverhältnis $PW_m$;
wenn m=S, die folgende Beurteilung durchführt:

wenn $t \geq t_s$, Eintritt in eine Hitzeerhaltungsstufe;
wenn $t < t_s$, falls $TB < T_{SL}$, Heizen mit dem Leistungsregelungsverhältnis $PW_s$, und wenn $TB > T_{SH}$, Beenden des Heizens;
wobei t eine in Echtzeit gemessene Heizzeitdauer ist, $t_m$ die voreingestellte Zeitschwelle der Heizstufe m ist, TB eine von der an dem Boden eines Haushaltsgeräts befindlichen Temperaturerfassungsvorrichtung erfasste Echtzeittemperatur ist, TT eine von der an der Oberseite des Haushaltsgeräts befindlichen Tem-

peraturerfassungsvorrichtung erfasste Echtzeittemperatur ist, $TT_m$ die zweite Temperaturschwelle der Heizstufe m ist, $TB_m$ die erste Temperaturschwelle der Heizstufe m ist, $T_{SL}$ die untere Grenztemperaturschwelle der Heizstufe S ist, $T_{SH}$ die obere Grenztemperaturschwelle der Heizstufe S ist, $PW_m$ ein voreingestelltes stufenweise abnehmendes Leistungsregelungsverhältnis der Heizstufe m ist, wenn m<S, $PW_s$ ein voreingestelltes Leistungsregelungsverhältnis der Heizstufe S ist, und $PW_s \leq PW_m$;
und/oder,
wobei der Steuerteil (404) speziell so konfiguriert ist, dass er:
in der Hitzeerhaltungsstufe die folgende Beurteilung durchführt:

wenn $t \geq A$, Beendigung des Kochens;
wenn t<A, falls $TB<TS_L$, Heizen mit dem Leistungsregelungsverhältnis PW, und falls $TB>T_{SH}$, Beenden des Heizens;
wobei t die in Echtzeit gemessene Heizzeitdauer ist, A die Zielzeitdauer ist, TB die von der Bodentemperaturüberwachungsvorrichtung des Haushaltsgeräts erfasste Echtzeittemperatur ist, $T_{SL}$ die untere Grenztemperaturschwelle der Heizstufe S ist, $T_{SH}$ die obere Grenztemperaturschwelle der Heizstufe S ist, $PW_s$ das voreingestellte Leistungsregelungsverhältnis der Heizstufe S ist und $PW \leq PW_S$.

12. Kochsteuervorrichtung (40), umfassend: eine Netzwerkschnittstelle (601), einen Speicher (602) und einen Prozessor (603);

wobei die Netzwerkschnittstelle (601) so konfiguriert ist, dass sie ein Signal während des Empfangs und des Sendens von Nachrichten von und zu anderen externen Netzwerkelementen empfängt und sendet;
der Speicher (602) so konfiguriert ist, dass er ein auf dem Prozessor (603) ausführbares Computerprogramm speichert;
der Prozessor (603) so konfiguriert ist, dass er Schritte eines Verfahrens gemäß einem der Ansprüche 1 bis 6 durchführt, wenn das Computerprogramm von dem Prozessor (603) ausgeführt wird.

13. Computerspeichermedium (2), auf dem ein Kochsteuerprogramm gespeichert ist, wobei, wenn das Kochsteuerprogramm von mindestens einem Prozessor (603) ausgeführt wird, Schritte eines Verfahrens gemäß einem der Ansprüche 1 bis 6 implementiert werden.

## Revendications

1. Procédé de commande de cuisson, comprenant :

(S101) la réception d'une température cible et d'une durée cible ;
(S102) la détermination d'une valeur de compensation de température correspondant à la température cible en fonction d'une relation prédéfinie entre une plage de température et la valeur de compensation de température, dans lequel (S102) la détermination de la valeur de compensation de température correspondant à la température cible en fonction de la relation prédéfinie entre la plage de température et la valeur de compensation de température comprend :

lorsque i<K, si $P<M_i$, la détermination que $\delta=\delta_i$, et si $M_{i+1} \geq P \geq M_i$, la détermination que $\delta=\delta_{i+1}$ ;
lorsque i=K, si $P<M_i$, la détermination que $\delta=\delta_i$, et si $P \geq M_i$, la détermination que $\delta=\delta_{i+1}$ ;
où P est la température cible, $M_i$ est une valeur de température de première étape prédéfinie, $\delta_i$ est une valeur de compensation de température prédéfinie, i est un nombre entier croissant progressivement à partir de 0, K est un nombre de grades divisés, et $\delta$ est la valeur de compensation de température correspondant à la température cible ;
(S103) la correction d'une valeur de température de la température cible en fonction de la valeur de compensation de température afin d'obtenir un paramètre de seuil de température cible ; et
(S104) la commande d'un traitement de cuisson en fonction du paramètre de seuil de température cible et de la durée cible.

2. Procédé selon la revendication 1, comprenant l'envoi d'un signal d'invite lorsque la durée cible atteint un seuil temporel prédéfini, dans lequel le seuil temporel prédéfini est une durée de cuisson prédéfinie à partir d'un moment où commence la cuisson jusqu'à un moment où la température cible est atteinte, et le signal d'invite est utilisé pour inviter un utilisateur à introduire un produit alimentaire à cuire.

3. Procédé selon l'une quelconque des revendications 1 à 2, dans lequel le processus de cuisson comprend : une étape de chauffage m et une étape de maintien du chauffage ; où m représente un numéro de séquence d'un grade de l'étape de chauffage, et m est un nombre entier croissant progressivement à partir de 1 avec une valeur maximale S; dans lequel, après (S102) la détermination de la valeur de compensation de température correspondant à la température cible en fonction de la relation prédéfinie entre la plage de température et la valeur de compensation de température, dans lequel, le procédé comprend de préférence en outre :
la correction d'une valeur de température de deuxième étape prédéfinie et d'une valeur de température de troisième étape prédéfinie en fonction de la valeur de compensation de température pour obtenir des paramètres de seuil de température prédéfini, les paramètres de seuil de température prédéfini comprenant un premier seuil de température et un deuxième seuil de température.

4. Procédé selon la revendication 3, dans lequel la correction de la correction de la valeur de température de deuxième étape prédéfinie et de la valeur de température de troisième étape prédéfinie en fonction de la valeur de compensation de température pour obtenir les paramètres de seuil de température prédéfini comprend :

(S210) lorsque m<S, le calcul du premier seuil de température de l'étape de chauffage m selon la formule 1) suivante :

$$TB_m = ADB(P-PB_m)-\delta \qquad\qquad 1),$$

où P est la température cible, $PB_m$ est la valeur de température de deuxième étape prédéfinie de l'étape de chauffage m, et $P>PB_m$, $TB_m$ est le premier seuil de température de l'étape de chauffage m, $\delta$ est la valeur de compensation de température correspondant à la température cible, et ADB représente le calcul d'une température de migration d'un dispositif de détection de température situé au niveau d'une partie inférieure d'un appareil ménager;
(S211) lorsque m<S, le calcul du deuxième seuil de température de l'étape de chauffage m selon la formule 2) suivante :

$$TT_m = ADT(P-PT_m)-\delta \qquad\qquad 2),$$

où P est la température cible, $PT_m$ est la valeur de température de troisième étape prédéfinie de l'étape de chauffage m, et $P>PT_m$, $TT_m$ est le deuxième seuil de température de l'étape de chauffage m, $\delta$ est la valeur de compensation de température correspondant à la température cible, et ADT représente le calcul d'une température de migration d'un dispositif de détection de température situé au niveau d'une partie supérieure de l'appareil ménager.

5. Procédé selon l'une quelconque des revendications 1 à 4, dans lequel (S103) la correction de la valeur de température de la température cible en fonction de la valeur de compensation de température afin d'obtenir un paramètre de seuil de température cible comprend :

(S212) lorsque m=S, le calcul d'un seuil de température de limite inférieure dans une étape de chauffage S selon la formule 3) suivante :

$$T_{SL} = ADB(P-2)-\delta \qquad\qquad 3),$$

où $T_{SL}$ est le seuil de température de limite inférieure de l'étape de chauffage S, P est la température cible, $\delta$ est la valeur de compensation de température correspondant à la température cible, et ADB représente le calcul de la température de migration du dispositif de détection de température situé au niveau de la partie inférieure de l'appareil ménager;
(S213) lorsque m=S, le calcul d'un seuil de température de limite supérieure de l'étape de chauffage S selon la formule 4) suivante :

$$T_{SH} = ADB(P)-\delta \qquad\qquad 4),$$

où les paramètres de seuil de température cible comprennent le seuil de température de limite supérieure et le seuil de température de limite inférieure, $T_{SH}$ est le seuil de température de limite supérieure de l'étape de chauffage S, P est la température cible, $\delta$ est la valeur de compensation de température correspondant à la température cible, et ADB représente le calcul de la température de migration du dispositif de détection de température situé au niveau de la partie inférieure de l'appareil ménager.

**6.** Procédé selon l'une quelconque des revendications 1 à 5, dans lequel (S104) la commande du traitement de cuisson en fonction du paramètre de seuil de température cible et de la durée cible comprend :
(S215 et S216) lorsque m<S, la conclusion suivante :

lorsque $t \geq t_m$ ou $TT \geq TT_m$ ou $TB \geq TB_m$, entrée dans une étape de chauffage m+1 ;
lorsque $t < t_m$ ou $TT < TT_m$ ou $TB < TB_m$, chauffage avec un rapport de régulation de puissance $PW_m$ ;
(S217) lorsque m=S, la conclusion suivante :

lorsque $t \geq t_s$, entrée dans une étape de maintien du chauffage ;
lorsque $t < t_s$, si $TB < T_{SL}$, chauffage avec le rapport de régulation de puissance $PW_s$, et si $TB > T_{SH}$, arrêt du chauffage ;
où t est une durée de chauffage mesurée en temps réel, $t_m$ est le seuil temporel prédéfini de l'étape de chauffage m, TB est une température en temps réel détectée par le dispositif de détection de température situé au niveau de la partie inférieure d'un appareil ménager, TT est une température en temps réel détectée par le dispositif de détection de température situé au niveau d'une partie supérieure de l'appareil ménager, $TT_m$ est le deuxième seuil de température de l'étape de chauffage m, $TB_m$ est le premier seuil de température de l'étape de chauffage m, $T_{SL}$ est le seuil de température de limite inférieure de l'étape de chauffage S, $T_{SH}$ est le seuil de température de limite supérieure de l'étape de chauffage S, $PW_m$ est un rapport de régulation de puissance prédéfini décroissant par étape de l'étape de chauffage m lorsque m<S, $PW_s$ est un rapport de régulation de puissance prédéfini de l'étape de chauffage S, et $PW_s \leq PW_m$ ;
et/ou
dans lequel (S104) la commande du processus de cuisson en fonction du paramètre de seuil de température cible et de la durée cible comprend en outre :
(S219) dans l'étape de maintien du chauffage, la conclusion suivante :

lorsque $t \geq A$, fin de la cuisson ;
lorsque $t < A$, si $TB < T_{SL}$, chauffage avec le rapport de régulation de puissance PW, et si $TB > T_{SH}$, arrêt du chauffage ;
où t est la durée de chauffage mesurée en temps réel, A est la durée cible, TB est la température en temps réel détectée par le dispositif de surveillance de température inférieur de l'appareil ménager, $T_{SL}$ est le seuil de température de limite inférieure de l'étape de chauffage S, $T_{SH}$ est le seuil de température de limite supérieure de l'étape de chauffage S, PW est le rapport de régulation de puissance prédéfini de l'étape de maintien du chauffage, $PW_s$ est le rapport de régulation de puissance prédéfini de l'étape de chauffage S, et $PW \leq PW_s$.

**7.** Dispositif de commande de cuisson (40) comprenant : une partie de réception (401), une partie de détermination (402), une première partie de correction (403) et une partie de commande (404) ; dans lequel,
la partie de réception (401) est configurée pour recevoir une température cible et une durée cible ; la partie de détermination (402) est configurée pour déterminer une valeur de compensation de température correspondant à la température cible, en fonction d'une relation prédéfinie entre une plage de température et la valeur de compensation de température, la partie de détermination (402) étant spécifiquement configurée pour :

lorsque i<K, si $P < M_i$, déterminer que $\delta = \delta_i$ ; si $M_{i+1} \geq P \geq M_i$, déterminer que $\delta = \delta_{i+1}$ ;
lorsque i=K, si $P < M_i$, déterminer que $\delta = \delta_i$ ; si $P \geq M_i$, déterminer que $\delta = \delta_{i+1}$ ;
où P est la température cible, $M_i$ est une valeur de température de première étape prédéfinie, $\delta_i$ est une valeur de compensation de température prédéfinie, i est un nombre entier croissant progressivement à partir de 0, K est un nombre de grades divisés, et $\delta$ est la valeur de compensation de température correspondant à la température cible ;
la première partie de correction (403) est configurée pour corriger une valeur de température de la température cible en fonction de la valeur de compensation de température afin d'obtenir un paramètre de seuil de température cible ; et
la partie de commande (404) est configurée pour commander un traitement de cuisson en fonction du paramètre de seuil de température cible et de la durée cible.

8. Dispositif selon la revendication 7, dans lequel le processus de cuisson comprend : une étape de chauffage m et une étape de maintien du chauffage ; m représente un numéro de séquence d'un grade de l'étape de chauffage, et m est un nombre entier croissant progressivement à partir de 1 avec une valeur maximale S.

9. Dispositif selon l'une quelconque des revendications 7 à 8, comprenant en outre une deuxième partie de correction (405) configurée pour :
corriger une valeur de température de deuxième étape prédéfinie et d'une valeur de température de troisième étape prédéfinie, en fonction de la valeur de compensation de température, pour obtenir des paramètres de seuil de température prédéfini, les paramètres de seuil de température prédéfini comprenant un premier seuil de température et un deuxième seuil de température ; dans lequel la deuxième partie de correction (405) est de préférence spécifiquement configurée pour :

lorsque m<S, calculer le premier seuil de température de l'étape de chauffage m selon la formule 5) suivante :

$$TB_m = ADB(P-PB_m)-\delta \qquad 5),$$

où P est la température cible, $PB_m$ est la valeur de température de deuxième étape prédéfinie de l'étape de chauffage m, et $P>PB_m$, $TB_m$ est le premier seuil de température de l'étape de chauffage m, $\delta$ est la valeur de compensation de température correspondant à la température cible, et ADB représente le calcul d'une température de migration d'un dispositif de détection de température situé au niveau d'une partie inférieure d'un appareil ménager ;
lorsque m<S, calculer le deuxième seuil de température de l'étape de chauffage m selon la formule 6) suivante :

$$TT_m = ADT(P-PT_m)-\delta \qquad 6),$$

où P est la température cible, $PT_m$ est la valeur de température de troisième étape prédéfinie de l'étape de chauffage m, et $P>PT_m$, $TT_m$ est le deuxième seuil de température de l'étape de chauffage m, $\delta$ est la valeur de compensation de température correspondant à la température cible, et ADT représente le calcul d'une température de migration d'un dispositif de détection de température situé au niveau d'une partie supérieure de l'appareil ménager.

10. Dispositif selon l'une quelconque des revendications 7 à 9, dans lequel la première partie de correction (403) est spécifiquement configurée pour :

lorsque m=S, calculer un seuil de température de limite inférieure de l'étape de chauffage S selon la formule 7) suivante :

$$T_{SL} = ADB(P-2)-\delta \qquad 7),$$

où $T_{SL}$ est le seuil de température de limite inférieure de l'étape de chauffage S, P est la température cible, $\delta$ est la valeur de compensation de température correspondant à la température cible, et ADB représente le calcul de la température de migration du dispositif de détection de température situé au niveau de la partie inférieure de l'appareil ménager;
lorsque m=S, calculer un seuil de température de limite supérieure de l'étape de chauffage S selon la formule 8) suivante :

$$T_{SH} = ADB(P)-\delta \qquad 8),$$

où les paramètres de seuil de température cible comprennent le seuil de température de limite supérieure et le seuil de température de limite inférieure, $T_{SH}$ est le seuil de température de limite supérieure de l'étape de chauffage S, P est la température cible, $\delta$ est la valeur de compensation de température correspondant à la température cible, et ADB représente le calcul de la température de migration du dispositif de détection de

EP 3 795 040 B1

température situé au niveau de la partie inférieure de l'appareil ménager.

11. Dispositif selon l'une quelconque des revendications 7 à 10, dans lequel la partie de commande (404) est spécifiquement configurée pour :
lorsque m<S, conclure ce qui suit :

lorsque t≥$t_m$ ou TT≥$TT_m$ ou TB≥$TB_m$, entrée dans une étape de chauffage m+1 ;
lorsque t<$t_m$ ou TT<$TT_m$ ou TB<$TB_m$, chauffage avec un rapport de régulation de puissance $PW_m$;
lorsque m=S, conclure ce qui suit :

lorsque t≥$t_s$, entrée dans une étape de maintien du chauffage ;
lorsque t<$t_s$, si TB<$T_{SL}$, chauffage avec le rapport de régulation de puissance $PW_s$, et si TB>$T_{SH}$, arrêt du chauffage ;
où t est une durée de chauffage mesurée en temps réel, $t_m$ est le seuil temporel prédéfini de l'étape de chauffage m, TB est une température en temps réel détectée par le dispositif de détection de température situé au niveau de la partie inférieure d'un appareil ménager, TT est une température en temps réel détectée par le dispositif de détection de température situé au niveau d'une partie supérieure de l'appareil ménager, $TT_m$ est le deuxième seuil de température de l'étape de chauffage m, $TB_m$ est le premier seuil de température de l'étape de chauffage m, $T_{SL}$ est le seuil de température de limite inférieure de l'étape de chauffage S, $T_{SH}$ est le seuil de température de limite supérieure de l'étape de chauffage S, $PW_m$ est un rapport de régulation de puissance prédéfini décroissant par étape de l'étape de chauffage m lorsque m<S, $PW_s$ est un rapport de régulation de puissance prédéfini de l'étape de chauffage S, et $PW_s$≤$PW_m$ ;
et/ou
dans lequel la partie de commande (404) est spécifiquement configurée pour :
dans l'étape de maintien du chauffage, conclure ce qui suit :

lorsque t≥A, fin de la cuisson ;
lorsque t<A, si TB<$T_{SL}$, chauffage avec le rapport de régulation de puissance PW, et si TB>$T_{SH}$, arrêt du chauffage ;
où t est la durée de chauffage mesurée en temps réel, A est la durée cible, TB est la température en temps réel détectée par le dispositif de surveillance de température inférieur de l'appareil ménager, $T_{SL}$ est le seuil de température de limite inférieure de l'étape de chauffage S, $T_{SH}$ est le seuil de température de limite supérieure de l'étape de chauffage S, $PW_s$ est le rapport de régulation de puissance prédéfini de l'étape de chauffage S, et PW≤$PW_s$.

12. Dispositif de commande de cuisson (40) comprenant : une interface réseau (601), une mémoire (602) et un processeur (603) ;

dans lequel l'interface réseau (601) est configurée pour recevoir et envoyer un signal pendant la réception et l'envoi de messages à partir de et vers d'autres éléments de réseau externes ;
la mémoire (602) est configurée pour stocker un programme informatique exécutable sur le processeur (603) ;
le processeur (603) est configuré pour mettre en œuvre des étapes d'un procédé selon l'une quelconque des revendications 1 à 6 lorsque le programme informatique est exécuté par le processeur (603).

13. Support de stockage informatique (2), sur lequel est stocké un programme de commande de cuisson, dans lequel, lorsque le programme de commande de cuisson est exécuté par au moins un processeur (603), des étapes d'un procédé selon l'une quelconque des revendications 1 à 6 sont mises en œuvre.

A target temperature and a target time duration are received ⟋ 101

A temperature compensation value corresponding to the target temperature is determined according to a preset relationship between a temperature range and the temperature compensation value ⟋ 102

A temperature value of the target temperature is corrected according to the temperature compensation value to obtain a target temperature threshold parameter ⟋ 103

A cooking processing is controlled according to the target temperature threshold parameter and the target time duration ⟋ 104

**FIG. 1**

201 — The target temperature P=65 ℃ and the target time duration A=60 minutes are received

↓ N

202 — It is determined whether 65℃<40℃

204 — It is determined that δ=0 ←Y—

↓ N

203 — It is determined whether 65℃<50℃

205 — It is determined that δ=1 ←Y—

↓ N

206 — It is determined whether 65℃<60℃

207 — It is determined that δ=2 ←Y—

↓ N

208 — It is determined whether 65℃<70℃

209 — It is determined that δ=3 ←Y—

↓

210 — The first temperature threshold of the heating 1 stage and the first temperature threshold of the heating 2 stage are calculated according to the following formulae: $TB_1=ADB(65℃-40℃)-3$, $TB_2=ADB(65℃-50℃)-3$

↓

211 — The second temperature threshold of the heating 1 stage and the second temperature threshold of the heating 2 stage are calculated according to the following formulae: $TT_1=ADT(65℃-45℃)-3$, $TT_2=ADT(65℃-55℃)-3$

↓

212 — The lower limit temperature threshold of the heating 3 stage is calculated according to the following formula: $T_{SL}=ADB(65℃-2)-3$

↓

213 — The upper limit temperature threshold of the heating 3 stage is calculated according to the following formula: $T_{SH}=ADB(65℃)-3$

↓

214 — The household appliance is started for heating, the timer is started to calculate the heating time duration t, and the temperature sensor on the top of the pot cover is started to measure the temperature TT in the cooking chamber and the temperature sensor at the bottom of the cooking chamber is started to measure the temperature TB in the cooking chamber

↓

215 — In the heating 1 stage, when the heating time duration t < 30 minutes or $TT<TT_1$ or $TB<TB_1$, heating is conducted with the power regulation ratio 100%; when the heating time duration t ≥ 30 minutes or $TT≥TT_1$ or $TB≥TB_1$, the timer is reset to restart the timing

↓

216 — In the heating 2 stage, when the heating time duration t < 40 minutes or $TT<TT_2$ or $TB<TB_2$, heating is conducted with the power regulation ratio 75%; when the heating time duration t ≥ 40 minutes or $TT≥TT_2$ or $TB≥TB_2$, the timer is reset to restart the timing

↓

217 — In the heating 3 stage, when the heating time duration t <50 minutes, if $TB<T_{SL}$, heating is conducted with the power regulation ratio 56%, and if $TB>T_{SH}$, heating is stopped; when the heating time duration t ≥ 50 minutes, the method is proceed to the next step

↓

218 — The household appliance emits a prompt sound to prompt the user to put the food to be cooked in the cooking chamber; at the same time, the timer is reset to restart the timing

↓

219 — When t ≥ 60 minutes, cooking is finished; When t < 60, if $TB<T_{SL}$, heating is conducted with the power regulation ratio 38%, and if $TB>T_{SH}$, heating is stopped

**FIG. 2**

FIG. 3

Receiving part 401

Determining part 402

First correcting part 403

Controlling part 404

Cooking control device 40

**FIG. 4**

**FIG. 5**

**FIG. 6**

**EP 3 795 040 B1**

## REFERENCES CITED IN THE DESCRIPTION

**Patent documents cited in the description**

- CN 107763677 A
- CN 104957967 A